(19) Europäisches Patentamt
European Patent Office
Office européen des brevets

(11) **EP 4 126 791 B1**

(12) **FASCICULE DE BREVET EUROPEEN**

(45) Date de publication et mention
de la délivrance du brevet:
**15.05.2024 Bulletin 2024/20**

(21) Numéro de dépôt: **21715919.3**

(22) Date de dépôt: **02.04.2021**

(51) Classification Internationale des Brevets (IPC):
**C04B 35/486** *(2006.01)*    **C04B 35/488** *(2006.01)*
**B02C 17/20** *(2006.01)*

(52) Classification Coopérative des Brevets (CPC):
**C04B 35/486; B02C 17/20; C04B 35/488;**
C04B 2235/3208; C04B 2235/3217;
C04B 2235/3225; C04B 2235/3229;
C04B 2235/5436; C04B 2235/5445;
C04B 2235/5481; C04B 2235/72; C04B 2235/76;
C04B 2235/784; C04B 2235/785; C04B 2235/786;

(Cont.)

(86) Numéro de dépôt international:
**PCT/EP2021/058816**

(87) Numéro de publication internationale:
**WO 2021/198520 (07.10.2021 Gazette 2021/40)**

(54) **BILLES FRITTEES DE ZIRCONE**

GESINTERTE ZIRKONIUMKUGELN

SINTERED ZIRCONIA BALLS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.04.2020 FR 2003340**

(43) Date de publication de la demande:
**08.02.2023 Bulletin 2023/06**

(73) Titulaire: **SAINT-GOBAIN CENTRE DE
RECHERCHES
ET D'ETUDES EUROPEEN
92400 Courbevoie (FR)**

(72) Inventeurs:
• **LINTINGRE, Eric
84000 AVIGNON (FR)**
• **WISS, Frédéric
84510 CAUMONT SUR DURANCE (FR)**

(74) Mandataire: **Cabinet Nony
11 rue Saint-Georges
75009 Paris (FR)**

(56) Documents cités:
EP-A1- 0 662 461    EP-A1- 2 377 816
EP-A1- 3 006 418    CN-A- 110 606 739
JP-A- S63 144 166    US-A- 4 820 667

(52) Classification Coopérative des Brevets (CPC):
(Cont.)
C04B 2235/94

**Description**

**Domaine technique**

La présente invention se rapporte à des billes frittées de zircone, à un procédé de fabrication de ces billes, et à l'utilisation de ces billes en tant qu'agents de broyage, agents de dispersion en milieu humide ou pour le traitement de surfaces.

**Technique antérieure**

Les industries des peintures, encres, colorants, laques magnétiques, ou composés agrochimiques utilisent des billes pour la dispersion et l'homogénéisation de constituants liquides et solides.

L'industrie minérale met en oeuvre des billes pour le broyage fin de matières éventuellement prébroyées à sec par des procédés traditionnels, notamment pour le broyage fin de carbonate de calcium, d'oxyde de titane, de gypse, de kaolin et de minerai de fer.

Dans le domaine du microbroyage, on connaît le sable à particules arrondies, les billes de verre, les billes métalliques et les billes céramiques.

- Le sable à particules arrondies, comme le sable d'OTTAWA par exemple, est un produit naturel et bon marché, mais inadapté aux broyeurs modernes, pressurisés et à fort débit. En effet, le sable est peu résistant, de faible densité, variable en qualité et abrasif pour le matériel.
- Les billes de verre, largement utilisées, présentent une meilleure résistance, une plus faible abrasivité et une disponibilité dans une gamme de diamètres plus large.
- Les billes métalliques, notamment en acier, présentent une faible inertie vis-à-vis des produits traités, entraînant notamment une pollution des charges minérales et un grisaillement des peintures, et une densité trop élevée nécessitant des broyeurs spéciaux. Elles impliquent notamment une forte consommation d'énergie, un échauffement important et une sollicitation mécanique élevée du matériel.
- Les billes en matière céramique ont une meilleure résistance que les billes de verre, une densité plus élevée et une excellente inertie chimique.

Les billes présentent classiquement une taille comprise entre 0,005 et 10 mm. On peut distinguer :

- les billes céramiques fondues, telles que décrites dans le document EP0662461 A1, généralement obtenues par fusion de composants céramiques, formation de gouttes sphériques à partir de la matière en fusion, puis solidification desdites gouttes, et
- les billes céramiques frittées, telles que décrites dans le document CN110606739A, généralement obtenues par un façonnage à froid d'une poudre céramique, puis une consolidation par cuisson à haute température.

A la différence des billes frittées, les billes fondues comportent le plus souvent une phase vitreuse intergranulaire très abondante qui vient remplir un réseau de grains cristallisés. Les problèmes rencontrés dans leurs applications respectives par les billes frittées et par les billes fondues, et les solutions techniques adoptées pour les résoudre, sont donc généralement différents. Par ailleurs, du fait des différences importantes entre les procédés de fabrication, une composition mise au point pour fabriquer une bille fondue n'est pas adaptée *a priori* pour fabriquer une bille frittée, et réciproquement.

Il existe un besoin permanent pour des billes frittées de zircone présentant une résistance à l'usure améliorée, en particulier pour des applications de broyage.

Un but de l'invention est de répondre, au moins partiellement, à ce besoin.

**Exposé de l'invention**

**Résumé de l'invention**

L'invention concerne une bille frittée, présentant :

- la composition chimique suivante, en pourcentages en masse sur la base des oxydes :

  - $ZrO_2 + HfO_2 + Y_2O_3 + CeO_2$ : complément à 100% ;
  - $0\% \leq Al_2O_3 \leq 1,5\%$ ;

- CaO $\leq$ 2% ;
- oxydes autres que $ZrO_2$, $HfO_2$, $Y_2O_3$, $CeO_2$, $Al_2O_3$ et CaO : $\leq$ 5% ;

les teneurs en $Y_2O_3$ et $CeO_2$, en pourcentages molaires sur la base de la somme de $ZrO_2$, $HfO_2$, $Y_2O_3$ et $CeO_2$, étant telles que 1,8% $\leq$ $Y_2O_3$ $\leq$ 2,5% et 0,1% $\leq$ $CeO_2$ $\leq$ 0,9%, et
- les phases cristallisées suivantes, en pourcentages en masse sur la base des phases cristallisées et pour un total de 100% :

- zircone stabilisée : complément à 100% ;
- zircone monoclinique : $\leq$ 10% ;
- phases cristallisées autres que zircone stabilisée et zircone

monoclinique : < 7%.

Comme on le verra plus en détail dans la suite de la description, les inventeurs ont découvert qu'une faible teneur en $CeO_2$ permet, de manière inattendue, de fabriquer, une bille frittée de zircone qui présente une excellente résistance lors du broyage, quelle que soit la teneur en $Y_2O_3$, pourvu qu'elle reste comprise entre 1,8% et 2,5%.

Les billes frittées de zircone selon l'invention sont ainsi particulièrement bien adaptées à des applications de dispersion en milieu humide et de microbroyage.

Une bille frittée de zircone selon l'invention peut encore présenter une ou plusieurs des caractéristiques optionnelles suivantes :

- la bille frittée est constituée d'oxydes pour plus de 99% de sa masse et/ou dans laquelle :

- la teneur en $Y_2O_3$ est supérieure ou égale à 1,9%, en pourcentages molaires sur la base de la somme de $ZrO_2$, $HfO_2$, $Y_2O_3$ et $CeO_2$, et/ou
- la teneur en $CeO_2$ est supérieure ou égale à 0,3% et inférieure à 0,7%, en pourcentages molaires sur la base de la somme de $ZrO_2$, $HfO_2$, $Y_2O_3$ et $CeO_2$, et/ou
- la teneur en $Al_2O_3$, en pourcentages en masse sur la base des oxydes, est supérieure ou égale à 0,2% et inférieure ou égale à 1,2%, ou inférieure à 0,1%, et/ou
- la teneur en CaO, en pourcentage en masse sur la base des oxydes, est inférieure à 1,0%, ou supérieure à 0,2%, et/ou
- la teneur totale en oxydes autres que $ZrO_2$, $HfO_2$, $Y_2O_3$, $CeO_2$, $Al_2O_3$ et CaO, en pourcentages en masse sur la base des oxydes, est inférieure à 2% ;

- en pourcentage en masse sur la base de la quantité totale de phases cristallisées :

- la teneur en zircone monoclinique est inférieure à 5%, et/ou
- la teneur totale en phases cristallisées autres que zircone stabilisée et zircone monoclinique, est inférieure à 5% ;

- la quantité massique de phase amorphe, en pourcentage en masse par rapport à la masse de ladite bille, est sensiblement nulle ;
- la zircone stabilisée est présente sensiblement uniquement sous la forme de zircone quadratique et/ou dans laquelle la zircone stabilisée est stabilisée à $Y_2O_3$ et à $CeO_2$ ;
- la bille frittée présente une taille moyenne de grains inférieure à 2 $\mu$m, et/ou présente une distribution de la taille des grains présentant un écart type inférieur à 0,20 $\mu$m ;
- la bille frittée présente une taille moyenne de grains inférieure à 0,6 $\mu$m, et/ou présente une distribution de la taille des grains présentant un écart type inférieur à 0,15 $\mu$m.

L'invention concerne également une poudre de billes comprenant plus de 90%, de préférence plus de 95%, de préférence sensiblement 100%, en pourcentages en masse, de billes selon l'invention.

L'invention concerne encore un dispositif choisi parmi une suspension, un broyeur, et un appareil de traitement de surfaces, ledit dispositif comportant une poudre de billes selon l'invention.

L'invention concerne également un procédé de fabrication de billes frittées de zircone selon l'invention, ledit procédé comprenant les étapes successives suivantes :

a) préparation d'un mélange particulaire présentant une taille médiane inférieure à 2 $\mu$m et une composition adaptée pour obtenir, à l'issue de l'étape g), des billes frittées de zircone selon l'invention,
b) optionnellement, séchage dudit mélange particulaire,

c) préparation d'une charge de départ à partir dudit mélange particulaire, optionnellement séché,

d) mise en forme de la charge de départ sous la forme de billes crues,

e) optionnellement, lavage,

f) optionnellement, séchage,

g) frittage à une température de frittage supérieure à 1300°C de manière à obtenir des billes frittées.

Un procédé de fabrication selon l'invention peut encore présenter une ou plusieurs des caractéristiques optionnelles suivantes :

- à l'étape a), une ou plusieurs poudres de matières premières introduites dans ledit mélange particulaire sont broyées, de préférence cobroyées ;
- à l'étape a), le mélange particulaire présente une taille médiane inférieure à 0,5 $\mu$m et/ou un rapport $(D_{90}-D_{10})/D_{50}$ inférieur à 2 ;
- à l'étape a), aucune matière première autre que les poudres de zircone au moins partiellement stabilisée avec $Y_2O_3$, de cérine et de corindon n'est introduite volontairement dans le mélange particulaire ;
- une ou plusieurs des poudres du mélange particulaire sont remplacées, au moins partiellement, par des poudres équivalentes qui conduisent, dans lesdites billes, aux mêmes constituants, dans les mêmes quantités, avec les mêmes phases cristallographiques.

L'invention concerne enfin l'utilisation d'une poudre de billes selon l'invention, en particulier fabriquées suivant un procédé selon l'invention, en tant qu'agents de broyage, en particulier en milieu humide, agents de dispersion en milieu humide, ou pour le traitement de surfaces.

## Définitions

- Une somme de teneurs d'oxydes (c'est-à-dire une formule dans laquelle ces teneurs sont reliées par le signe « + ») n'implique pas que les deux oxydes reliés par ce signe « + » sont nécessairement simultanément présents.
- Par « particule », on entend un produit solide individualisé dans une poudre.
- « Poudre » et « mélange particulaire » sont classiquement des synonymes. A des fins de clarté, dans la présente description, on désigne par « mélange particulaire » la poudre qui est fabriquée à l'étape a) d'un procédé selon l'invention.
- On appelle classiquement « frittage » la consolidation par traitement thermique à plus de 1100°C d'une particule crue (agglomérat granulaire), avec éventuellement une fusion, partielle ou totale, de certains de ses constituants (mais pas de tous ses constituants).
- Les « grains » d'une bille frittée de zircone sont constitués des particules du mélange particulaire agglomérées par le frittage. Une bille frittée selon l'invention est ainsi constituée d'un agglomérat de grains liés par frittage. Elle peut également comporter une phase amorphe.
- Par « bille », on entend une particule présentant une sphéricité, c'est-à-dire un rapport entre son plus petit diamètre de Ferret et son plus grand diamètre de Ferret, supérieure à 0,6, quelle que soit la façon par laquelle cette sphéricité a été obtenue.

De préférence les billes selon l'invention présentent une sphéricité supérieure à 0,7.

- On appelle « taille » d'une bille, son plus petit diamètre de Ferret.
- On appelle « percentiles » 10 (noté $D_{10}$), 50 (noté $D_{50}$) et 90 (noté $D_{90}$) d'une poudre ou d'un mélange particulaire, les tailles de particules correspondant aux pourcentages égaux respectivement à 10%, 50% et 90%, en masse, sur la courbe de distribution granulométrique cumulée des tailles de particules de la poudre ou du mélange particulaire respectivement, lesdites tailles de particules étant classées par ordre croissant. Selon cette définition, 10% en masse des particules de la poudre ou du mélange particulaire ont ainsi une taille inférieure à $D_{10}$ et 90% des particules, en masse, présentent une taille supérieure ou égale à $D_{10}$. Les percentiles peuvent par exemple être déterminés à l'aide d'un granulomètre laser.
- On appelle « taille médiane » d'une poudre de particules ou d'un mélange particulaire, le percentile 50, $D_{50}$. La taille médiane divise donc les particules de la poudre ou du mélange particulaire, en première et deuxième populations égales en masse, ces première et deuxième populations ne comportant que des particules présentant une taille supérieure ou égale, ou inférieure respectivement, à la taille médiane.
- On appelle « taille moyenne » des grains d'une bille frittée, la dimension mesurée selon une méthode de « Mean Linear Intercept ». Une méthode de mesure de ce type est décrite dans la norme ASTM E1382.

- Par « bille frittée », on entend une bille solide obtenue par frittage d'une bille crue.
- Les « autres oxydes » sont de préférence des « impuretés », c'est-à-dire des oxydes inévitables, introduits nécessairement avec les matières premières. En particulier les oxydes de sodium et autres alcalins sont des impuretés. A titre d'exemples, on peut citer $Na_2O$ ou $K_2O$. En revanche, l'oxyde d'hafnium n'est pas considéré comme une impureté. On considère qu'une teneur totale en impuretés inférieure à 5% ne modifie pas substantiellement les résultats obtenus.
- Dans le cadre de cette demande, $HfO_2$ est considéré comme n'étant pas chimiquement dissociable de $ZrO_2$. Dans la composition chimique d'un produit comportant de la zircone, « $ZrO_2$ » ou « $ZrO_2+HfO_2$ » désignent donc la teneur totale de ces deux oxydes. Selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 2%.
- Dans un souci de clarté, on utilise les termes « $ZrO_2$ » (ou « $ZrO_2+HfO_2$ ») et « $Al_2O_3$ » pour désigner les teneurs de ces oxydes dans la composition, et « zircone » et « corindon » pour désigner des phases cristallisées de ces oxydes constituées de $ZrO_2$ + $HfO_2$, et de $Al_2O_3$, respectivement. Ces oxydes peuvent cependant être également présents sous d'autres phases. Le terme « zircone » inclut classiquement la faible quantité de phase hafnie, non distinguable par diffraction X.
- Par « zircone stabilisée », on entend l'ensemble constitué de la zircone quadratique et de la zircone cubique.
- Par « zircone au moins partiellement stabilisée », on entend une zircone partiellement stabilisée ou une zircone entièrement stabilisée. Une zircone partiellement stabilisée est une zircone comportant de la zircone monoclinique, et présentant une teneur en zircone monoclinique inférieure à 50%, en pourcentage en masse sur la base de la quantité totale de phases cristallisées, les autres phases en présence étant la phase quadratique et/ou la phase cubique. $CeO_2$ et $Y_2O_3$ servent à stabiliser la zircone mais peuvent aussi être présents en dehors de celle-ci.
- Par « poudre d'un composé », on entend une poudre comportant plus de 95% en masse de particules comportant plus de 90% en masse dudit composé. Ainsi, une poudre de corindon comporte plus de 95% en masse de particules comportant plus de 90% en masse de corindon. Une « poudre de zircone quadratique » comporte plus de 95% en masse de particules comportant plus de 90% en masse de zircone quadratique. Une « poudre de zircone stabilisée » comporte plus de 95% en masse de particules comportant plus de 90% en masse de zircone stabilisée.
- Par « précurseur » d'un oxyde, on entend un ou plusieurs constituants apte(s) à fournir ledit oxyde lors d'une étape de frittage d'un procédé de fabrication selon l'invention. Par exemple, des hydroxydes d'aluminium sont des précurseurs d'alumine.
- Une quantité d'un précurseur d'un oxyde est dite « équivalente » à une quantité dudit oxyde lorsque, lors du frittage, elle conduit à ladite quantité dudit oxyde.
- L'aire spécifique est calculée par la méthode BET (Brunauer Emmet Teller) telle que décrite dans Journal of American Chemical Society 60 (1938), pages 309 à 316.
- Par « masse volumique absolue » d'un produit de zircone fritté, en particulier d'une bille frittée, on entend la masse volumique absolue MVA calculée à l'aide de l'équation (1) suivante :

$$MVA = 100/[(x/3,987)+(100-x)/\ MVAz] \qquad (1)$$

x étant la teneur en alumine, en pourcentages massiques, et

MVAz étant la masse volumique absolue de la zircone stabilisée à $Y_2O_3$ et $CeO_2$, calculée en divisant la masse de la maille élémentaire de la zircone par le volume de ladite maille élémentaire, la zircone étant considérée stabilisée uniquement dans la phase quadratique. Le volume de la maille élémentaire est calculé à l'aide des paramètres de ladite maille déterminés par diffraction des rayons X. La masse de la maille élémentaire est égale à la somme de la masse des éléments Zr, O, Y et Ce, présents dans ladite maille, en considérant que la totalité d'$Y_2O_3$ et de $CeO_2$ stabilise la zircone.

- Par « masse volumique apparente » d'un produit fritté, en particulier d'une bille frittée, on entend classiquement le rapport égal à la masse dudit produit fritté divisée par le volume qu'occupe ledit produit fritté. Elle peut être mesurée par imbibition, selon le principe de la poussée d'Archimède.
- Par « masse volumique relative » d'un produit fritté, en particulier d'une bille frittée, on entend le rapport égal à la masse volumique apparente divisée par la masse volumique absolue, exprimé en pourcentage.
- Sauf mention contraire, toutes les moyennes sont des moyennes arithmétiques.
- Sauf mention contraire, tous les pourcentages sont des pourcentages massiques sur la base des oxydes.
- « Comporter » ou « comprendre » ou « présenter » doivent être interprétés de manière non limitative.
- Toutes les caractéristiques des billes peuvent être mesurées conformément aux protocoles décrits pour les exemples.

## Description détaillée

*Bille frittée de zircone*

La bille frittée de zircone selon l'invention est remarquable par sa composition.

De manière surprenante et sans pouvoir l'expliquer de manière théorique, les inventeurs ont découvert que la présence simultanée de $Y_2O_3$ et de $CeO_2$, dans les teneurs présentes dans l'invention, permet d'atteindre un excellent compromis entre résistance lors du broyage et résistance au vieillissement hydrothermal.

Une bille frittée de zircone selon l'invention est de préférence constituée d'oxydes pour plus de 98%, de préférence pour plus de 99%, de préférence pour plus de 99,5%, de préférence pour plus de 99,9%, de sa masse. De préférence, la bille frittée de zircone selon l'invention est sensiblement entièrement constituée d'oxydes.

De préférence, une bille frittée de zircone selon l'invention présente une teneur en $Y_2O_3$ supérieure ou égale à 1,9%, de préférence supérieure ou égale à 2% et/ou de préférence inférieure ou égale à 2,4%, de préférence inférieure ou égale à 2,2%, en pourcentages molaires sur la base de la somme de $ZrO_2$, $HfO_2$, $Y_2O_3$ et $CeO_2$.

De préférence, une bille frittée de zircone selon l'invention présente une teneur en $CeO_2$ supérieure ou égale à 0,2%, de préférence supérieure ou égale à 0,3%, de préférence supérieure ou égale à 0,4% et/ou de préférence inférieure à 0,8%, de préférence inférieure à 0,7%, de préférence inférieure à 0,6%, en pourcentages molaires sur la base de la somme de $ZrO_2$, $HfO_2$, $Y_2O_3$ et $CeO_2$.

De préférence, une bille frittée de zircone selon l'invention présente une teneur en $Y_2O_3$ supérieure ou égale à 1,9%, de préférence supérieure ou égale à 2% et/ou de préférence inférieure ou égale à 2,4%, de préférence inférieure ou égale à 2,2%, et une teneur en $CeO_2$ supérieure ou égale à 0,2%, de préférence supérieure ou égale à 0,3%, de préférence supérieure ou égale à 0,4% et inférieure à 0,8%, de préférence inférieure à 0,7%, de préférence inférieure à 0,6%, en pourcentages molaires sur la base de la somme de $ZrO_2$, $HfO_2$, $Y_2O_3$ et $CeO_2$. Avantageusement, la bille frittée de zircone présente une excellente résistance à l'usure lors du broyage.

Dans un mode de réalisation préféré, la bille frittée de zircone selon l'invention présente une teneur en $Al_2O_3$ supérieure ou égale à 0,2%, de préférence supérieure ou égale à 0,25% et de préférence inférieure ou égale à 1,2%, de préférence inférieure ou égale à 1%, de préférence inférieure ou égale à 0,8%, en pourcentages en masse sur la base des oxydes.

Des essais ont cependant montré que la présence d'$Al_2O_3$ n'était pas indispensable. Dans un mode de réalisation, la bille frittée de zircone selon l'invention présente une teneur en $Al_2O_3$ inférieure à 0,1%, inférieure à 0,005%, inférieure à 0,003%, inférieure 0,002%, ou sensiblement nulle, en pourcentage en masse sur la base des oxydes.

La bille frittée selon l'invention présente de préférence, une teneur en CaO inférieure à 1,5%, préférence inférieure à 1,0%, en pourcentages en masse sur la base des oxydes.

Dans un mode de réalisation, la bille frittée de zircone selon l'invention présente une teneur en CaO supérieure à 0,1%, de préférence supérieure à 0,2%, de préférence supérieure à 0,3%, en pourcentage en masse sur la base des oxydes.

La bille frittée selon l'invention présente de préférence, une teneur totale en oxydes autres que $ZrO_2$, $HfO_2$, $Y_2O_3$, $CeO_2$, $Al_2O_3$ et CaO inférieure à 4%, de préférence inférieure à 3%, de préférence inférieure à 2%, de préférence inférieure à 1%, de préférence encore inférieure à 0,8%, de préférence inférieure à 0,5%, en pourcentage en masse sur la base des oxydes. De préférence, dans la bille frittée de zircone selon l'invention, les oxydes autres que $ZrO_2$, $HfO_2$, $Y_2O_3$, $CeO_2$, $Al_2O_3$ et CaO sont des impuretés.

De préférence, dans la bille frittée de zircone selon l'invention, tout oxyde autre que $ZrO_2$, $HfO_2$, $Y_2O_3$, $CeO_2$, $Al_2O_3$ et CaO est présent en une quantité inférieure à 2,0%, de préférence inférieure à 1,5%, de préférence inférieure à 1,0%, de préférence inférieure à 0,8%, de préférence inférieure à 0,5%, de préférence inférieure à 0,3%.

La bille frittée de zircone selon l'invention présente de préférence une teneur en zircone monoclinique, en pourcentage en masse sur la base de la quantité totale de phases cristallisées, inférieure à 5%, de préférence sensiblement nulle.

La bille frittée de zircone selon l'invention présente de préférence une teneur totale en phases cristallisées autres que zircone stabilisée et zircone monoclinique, en pourcentage en masse sur la base de la quantité totale de phases cristallisées, inférieure à 6%, de préférence inférieure à 5%, voire inférieure à 4%.

Dans la bille frittée de zircone selon l'invention, la zircone est stabilisée à $Y_2O_3$ et $CeO_2$. De préférence, la zircone stabilisée est présente sensiblement uniquement sous la forme de zircone quadratique.

De préférence, dans la bille frittée de zircone selon l'invention, la quantité massique de phase amorphe, c'est-à-dire vitreuse, en pourcentage en masse par rapport à la masse de ladite bille, est inférieure à 7%, de préférence inférieure à 5%, de préférence sensiblement nulle.

La bille frittée de zircone selon l'invention présente une taille moyenne de grains inférieure à 2 $\mu$m, de préférence inférieure à 1,5 $\mu$m, de préférence inférieure à 1 $\mu$m, de préférence inférieure à 0,9 $\mu$m, de préférence inférieure à 0,8 $\mu$m, de préférence inférieure à 0,6 $\mu$m, de préférence inférieure à 0,5 $\mu$m, et de préférence supérieure à 0,1 $\mu$m, de

préférence supérieure à 0,2 $\mu$m. Avantageusement, la résistance lors du broyage est améliorée.

De préférence, la bille frittée de zircone selon l'invention présente une distribution de la taille des grains présentant un écart type inférieur à 0,20 $\mu$m, de préférence inférieur à 0,15 $\mu$m, de préférence inférieur à 0,1 $\mu$m.

Dans un mode de réalisation préféré, la bille frittée de zircone selon l'invention présente :

- la composition chimique suivante, en pourcentages massiques sur la base des oxydes :

  - $ZrO_2$ + $HfO_2$ + $Y_2O_3$ + $CeO_2$ : complément à 100% ;
  - 0% $\leq Al_2O_3 \leq$ 1,5%, la teneur en $Al_2O_3$ étant de préférence supérieure ou égale à 0,2%, de préférence supérieure ou égale à 0,25% et de préférence inférieure ou égale à 1,2%, de préférence inférieure ou égale à 1%, de préférence inférieure ou égale à 0,8% ;
  - CaO $\leq$ 2%, la teneur en CaO étant de préférence inférieure à 1,5%, préférence inférieure à 1,0% ;
  - oxydes autres que $ZrO_2$, $HfO_2$, $Y_2O_3$, $CeO_2$, $Al_2O_3$ et CaO, ou « autres oxydes » : $\leq$ 5%, la teneur en « autres oxydes » étant de préférence inférieure à 4%, de préférence inférieure à 3%, de préférence inférieure à 2%, de préférence inférieure à 1%, de préférence encore inférieure à 0,8%, de préférence inférieure à 0,5%,

  les teneurs en $Y_2O_3$ et $CeO_2$, en pourcentages molaires sur la base de la somme de $ZrO_2$, $HfO_2$, $Y_2O_3$ et $CeO_2$, étant telles que la teneur en $Y_2O_3$ est supérieure ou égale à 1,9%, de préférence supérieure ou égale à 2% et/ou de préférence inférieure ou égale à 2,4%, de préférence inférieure ou égale à 2,2%, et la teneur en $CeO_2$ est supérieure ou égale à 0,2%, de préférence supérieure ou égale à 0,3%, de préférence supérieure ou égale à 0,4% et inférieure à 0,8%, de préférence inférieure à 0,7%, de préférence inférieure à 0,6%, et

- les phases cristallisées suivantes, en pourcentages en masse sur la base des phases cristallisées et pour un total de 100% :

  - zircone stabilisée : complément à 100%, ladite zircone stabilisée étant stabilisée à $Y_2O_3$ et $CeO_2$, et étant de préférence présente sensiblement uniquement sous la forme de zircone quadratique ;
  - zircone monoclinique $\leq$ 10%, la teneur en zircone monoclinique étant de préférence inférieure à 8%, de préférence inférieure à 5%, de préférence sensiblement nulle ;
  - phases cristallisées autres que zircone stabilisée et zircone monoclinique, ou « autres phases cristallisées » : < 7%, la teneur en autres phases cristallisées étant de préférence inférieure à 5%, de préférence sensiblement nulle, et

- une quantité massique de phase amorphe, en pourcentage en masse par rapport à la masse de la bille frittée de zircone, inférieure à 7%, de préférence inférieure à 5%, de préférence sensiblement nulle.

Dans ledit mode de réalisation préféré, la bille frittée de zircone présente de préférence une taille moyenne de grains inférieure à 2 $\mu$m, de préférence inférieure à 1,5 $\mu$m, de préférence inférieure à 1 $\mu$m, de préférence inférieure à 0,9 $\mu$m, de préférence inférieure à 0,8 $\mu$m, de préférence inférieure à 0,6 $\mu$m, de préférence inférieure à 0,5 $\mu$m, et de préférence supérieure à 0,1 $\mu$m, de préférence supérieure à 0,2 $\mu$m, et une distribution de la taille des grains présentant un écart type inférieur à 0,20 $\mu$m, de préférence inférieur à 0,15 $\mu$m, de préférence inférieur à 0,1 $\mu$m.

De préférence, la bille frittée de zircone selon l'invention présente une masse volumique relative supérieure à 99,5%, de préférence supérieure à 99,6%, de préférence supérieure à 99,7%, de préférence supérieure à 99,8%, de préférence supérieure à 99,9%, la masse volumique absolue étant calculée selon la méthode décrite précédemment.

La bille frittée de zircone selon l'invention présente de préférence une taille inférieure à 10 mm, de préférence inférieure à 2,5 mm et/ou supérieure à 0,005 mm, de préférence supérieure à 0,01 mm, de préférence supérieure à 0,02 mm, de préférence supérieure à 0,03 mm.

Une bille frittée de zircone selon l'invention présente de préférence une sphéricité supérieure à 0,7, de préférence supérieure à 0,8, de préférence supérieure à 0,85, voire supérieure à 0,9 ;

Une bille frittée de zircone selon l'invention peut être fabriquée au moyen d'un procédé de fabrication selon l'invention.

*Procédé de fabrication des billes frittées de zircone*

Pour fabriquer des billes frittées de zircone selon l'invention, on peut procéder suivant les étapes a) à g) décrites ci-dessus et détaillées ci-dessous.

**A l'étape** a), on prépare un mélange particulaire présentant une taille médiane inférieure à 2 $\mu$m. La composition du mélange particulaire est également adaptée, d'une manière connue en soi, pour que les billes frittées de zircone aient une composition conforme à l'invention.

Les poudres de matières premières sont mélangées intimement.

Les poudres de matières premières peuvent être broyées individuellement ou, de préférence, cobroyées afin que le mélange particulaire obtenu présente une taille médiane inférieure à 2 $\mu$m, de préférence inférieure à 1,5 $\mu$m, de préférence inférieure à 1 $\mu$m, de préférence inférieure à 0,8 $\mu$m, de préférence inférieure à 0,6 $\mu$m, de préférence inférieure à 0,5 $\mu$m, de préférence inférieure à 0,4 $\mu$m, de préférence inférieure à 0,3 $\mu$m et/ou de préférence supérieure à 0,05 $\mu$m. Ce broyage peut être un broyage humide. Un broyage ou un cobroyage peuvent être également utilisés pour obtenir un mélange intime.

De préférence, le mélange particulaire présente un rapport $(D_{90}-D_{10})/D_{50}$ inférieur à 2, de préférence inférieur à 1,5, de préférence inférieur à 1.

$Y_2O_3$ et $CeO_2$ sont des stabilisants connus de la zircone. Dans le mélange particulaire, ils peuvent stabiliser ou non la zircone. Selon l'invention, le mélange particulaire doit cependant conduire à une bille frittée de zircone selon l'invention.

Dans le mélange particulaire, la zircone est, de préférence, au moins en partie, stabilisée avec $Y_2O_3$. De préférence alors, une poudre de cérine $CeO_2$ est utilisée comme source de $CeO_2$. Dans ledit mode de réalisation, la poudre de zircone est au moins en partie stabilisée avec $Y_2O_3$ et présente une aire spécifique, calculée par la méthode BET, supérieure à 0,5 m$^2$/g, de préférence supérieure à 1 m$^2$/g, de préférence supérieure à 1,5 m$^2$/g, et/ou inférieure à 20 m$^2$/g, de préférence inférieure à 18 m$^2$/g, de préférence inférieure à 15 m$^2$/g. Avantageusement, le broyage optionnel, généralement en suspension, en est facilité. De plus, la température de frittage à l'étape f) peut être réduite. Dans ledit mode de réalisation, dans ladite poudre de zircone au moins en partie stabilisée avec $Y_2O_3$, la zircone se présente sensiblement uniquement sous la forme quadratique.

Un précurseur de cérine et/ou d'yttrine et/ou de zircone peut également être utilisé dans le mélange particulaire.

La cérine et/ou le précurseur de cérine et/ou l'yttrine et/ou le précurseur d'yttrine peuvent, partiellement ou totalement, être incorporés dans le mélange particulaire sous forme d'une poudre, c'est-à-dire sous une forme séparée de la zircone, de manière que, après frittage, la zircone soit au moins en partie stabilisée. Dans ce mode de réalisation, la taille médiane de la poudre d'yttrine et/ou du précurseur d'yttrine et/ou de cérine et/ou du précurseur de cérine est de préférence inférieure à 1 $\mu$m, de préférence inférieure à 0,5 $\mu$m, de préférence encore inférieure à 0,3 $\mu$m. L'efficacité de la stabilisation de la zircone en est avantageusement améliorée lors du frittage.

Dans un mode de réalisation, le mélange particulaire comporte des particules dans lesquelles de la zircone, stabilisée ou non, et de l'yttrine et/ou de la cérine sont intimement mélangées. Un tel mélange intime peut par exemple être obtenu par co-précipitation, thermo-hydrolyse ou atomisation, et éventuellement consolidé par un traitement thermique. Dans un dit mélange particulaire, l'yttrine et/ou la cérine peuvent être remplacés par une quantité équivalente de précurseur(s).

De préférence, le mélange particulaire ne comporte pas de précurseur d'yttrine.

De préférence, le mélange particulaire ne comporte pas de précurseur de cérine.

De préférence, le mélange particulaire ne comporte pas de précurseur de zircone.

De préférence, le mélange particulaire ne comporte pas de poudre de zircone monoclinique.

De préférence, la teneur en $Y_2O_3$ est supérieure ou égale à 1,9%, de préférence supérieure ou égale à 2% et/ou de préférence inférieure ou égale à 2,4%, de préférence inférieure ou égale à 2,2%, en pourcentages molaires sur la base de la somme de $ZrO_2$, $HfO_2$, $Y_2O_3$ et $CeO_2$ présents dans ledit mélange particulaire.

De préférence, la teneur en $CeO_2$ est supérieure ou égale à 0,2%, de préférence supérieure ou égale à 0,3%, de préférence supérieure ou égale à 0,4% et/ou de préférence inférieure à 0,8%, de préférence inférieure à 0,7%, de préférence inférieure à 0,6%, en pourcentages molaires sur la base de la somme de $ZrO_2$, $HfO_2$, $Y_2O_3$ et $CeO_2$ présents dans ledit mélange particulaire.

De préférence, la teneur en $Y_2O_3$ est supérieure ou égale à 1,9%, de préférence supérieure ou égale à 2% et/ou de préférence inférieure ou égale à 2,4%, de préférence inférieure ou égale à 2,2%, et la teneur en $CeO_2$ est supérieure ou égale à 0,2%, de préférence supérieure ou égale à 0,3%, de préférence supérieure ou égale à 0,4% et inférieure à 0,8%, de préférence inférieure à 0,7%, de préférence inférieure à 0,6%, en pourcentages molaires sur la base de la somme de $ZrO_2$, $HfO_2$, $Y_2O_3$ et $CeO_2$ présents dans ledit mélange particulaire. Avantageusement, la bille frittée de zircone obtenue à partir dudit mélange particulaire présente une excellente résistance lors du broyage.

Dans un mode de réalisation préféré, le mélange particulaire comporte une poudre d'alumine en une quantité supérieure ou égale à 0,2%, de préférence supérieure ou égale à 0,25% et de préférence inférieure ou égale à 1,2%, de préférence inférieure ou égale à 1%, de préférence inférieure ou égale à 0,8%, en pourcentages en masse sur la base de la masse du mélange particulaire. Avantageusement, l'aptitude au frittage du mélange particulaire en est améliorée. L'alumine peut être remplacée, en partie ou en totalité, par une quantité équivalente de précurseur. De préférence, le mélange particulaire ne comporte pas de précurseur d'alumine. De préférence encore, l'alumine est essentiellement présente sous la forme de corindon, qui, de préférence, présente une taille médiane inférieure à 5 $\mu$m, de préférence inférieure à 3 $\mu$m, de préférence inférieure à 1 $\mu$m.

Des essais ont cependant montré que la présence d'alumine n'est pas indispensable. Dans un mode de réalisation, la teneur en alumine peut être en particulier inférieure à 0,1%, inférieure à 0,05%, inférieure à 0,03%, inférieure 0,01%, ou sensiblement nulle, en pourcentages en masse sur la base de la masse du mélange particulaire.

Dans un mode de réalisation, le mélange particulaire comporte des poudres

- de zircone au moins partiellement stabilisée avec $Y_2O_3$,
- de cérine,
- de corindon.

Les poudres apportant les oxydes sont de préférence choisies de manière que la teneur totale en oxydes autres que $ZrO_2$, $HfO_2$, $Y_2O_3$, $CeO_2$, $Al_2O_3$ et CaO soit inférieure à 5%, en pourcentage massique sur la base des oxydes.

De préférence, aucune matière première autre que les poudres de zircone au moins partiellement stabilisée avec $Y_2O_3$, de cérine et de corindon n'est introduite volontairement dans le mélange particulaire, les autres oxydes présents étant des impuretés.

De préférence, les poudres utilisées présentent chacune une taille médiane inférieure à 5 $\mu$m, de préférence inférieure à 3 $\mu$m, de préférence inférieure à 2 $\mu$m, de préférence inférieure à 1 $\mu$m, de préférence inférieure à 0,7 $\mu$m, de préférence inférieure à 0,6 $\mu$m, de préférence inférieure à 0,5 $\mu$m, de préférence inférieure à 0,4 $\mu$m, voire inférieure à 0,3 $\mu$m.

Quel que soit le mode de réalisation, une ou plusieurs des poudres du mélange particulaire décrites précédemment peuvent être remplacées, au moins partiellement, par des poudres équivalentes, c'est-à-dire par des poudres qui, lors de la fabrication d'une bille selon l'invention, conduisent, dans ladite bille, aux mêmes constituants (même composition, même phase cristallographique), dans les mêmes quantités.

**A l'étape** b), optionnelle, le mélange particulaire peut être séché, par exemple en étuve ou par atomisation, en particulier s'il a été obtenu par broyage humide ou si au moins une poudre de matière première a été obtenue par broyage humide. De préférence, la température et/ou la durée de l'étape de séchage sont adaptées de manière à ce que l'humidité résiduelle du mélange particulaire soit inférieure à 2%, voire inférieure à 1,5%.

**A l'étape** c), on prépare, de préférence à température ambiante, une charge de départ comportant le mélange particulaire obtenu en fin d'étape a) ou en fin d'étape b) et, optionnellement, un solvant, de préférence de l'eau, dont la quantité est adaptée à la méthode de mise en forme de l'étape d).

Comme cela est bien connu de l'homme du métier, la charge de départ est adaptée au procédé de mise en forme de l'étape d).

La mise en forme peut en particulier résulter d'un procédé de gélification. A cet effet, un solvant, de préférence de l'eau, est de préférence ajouté à la charge de départ de manière à réaliser une suspension.

La suspension présente de préférence une teneur massique en matière sèche comprise entre 50 et 70%.

La suspension peut encore comporter un ou plusieurs des constituants suivants :

- un dispersant, à raison de 0 à 10%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants, modificateurs de tension de surface et agents gélifiants sont bien connus de l'homme du métier.

A titre d'exemples, on peut citer,

- comme dispersants, la famille des polyméthacrylates de sodium ou d'ammonium, la famille des polyacrylates de sodium ou d'ammonium, la famille des citrates, par exemple d'ammonium, la famille des phosphates de sodium, et la famille des esters de l'acide carbonique ;
- comme modificateurs de tension de surface, les solvants organiques tels que des alcools aliphatiques ;
- comme agents gélifiants, des polysaccharides naturels.

Le mélange particulaire est de préférence ajouté dans un mélange d'eau et de dispersants/défloculants dans un broyeur à boulets. Après agitation, on ajoute de l'eau dans laquelle a été préalablement dissout un agent gélifiant de manière à obtenir une suspension.

Si la mise en forme résulte d'une extrusion, des polymères thermoplastiques ou des polymères thermodurcissables peuvent être ajoutés à la charge de départ, ladite charge de départ ne contenant de préférence pas de solvant.

**A l'étape d),** tout procédé conventionnel de mise en forme connu pour la fabrication de billes frittées peut être mis en oeuvre.

Parmi ces procédés, on peut citer :

- les procédés de granulation, mettant par exemple en oeuvre des granulateurs, des granulateurs à lit fluidisé, ou des disques de granulation,
- les procédés de gélification,
- les procédés de moulage par injection ou extrusion, et
- les procédés de pressage.

Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique.

**A l'étape e),** optionnelle, les billes crues obtenues lors de l'étape précédente sont lavées, par exemple à l'eau.

**A l'étape f),** optionnelle, les billes crues, éventuellement lavées, sont séchées, par exemple à l'étuve.

**A l'étape g),** les billes crues, éventuellement lavées et/ou séchées, sont frittées. De préférence, le frittage s'effectue sous air, de préférence dans un four électrique, de préférence à pression atmosphérique.

Le frittage à l'étape g) est effectué à une température de préférence supérieure à 1330°C, de préférence supérieure à 1350°C et de préférence inférieure à 1600°C, de préférence inférieure à 1550°C, de préférence inférieure à 1500°C, de préférence inférieure à 1450°C.

La durée de maintien au palier de température est de préférence supérieure à 1 heure et/ou de préférence inférieure à 10 heures, de préférence inférieure à 7 heures, de préférence inférieure à 5 heures, de préférence inférieure à 3 heures. De préférence, la durée de frittage est comprise entre 1 et 3 heures.

Les billes frittées de zircone obtenues présentent de préférence un plus petit diamètre supérieur à 0,005 mm, de préférence supérieur à 0,1 mm, de préférence supérieur à 0,15 mm et inférieur à 10 mm, de préférence inférieur à 5 mm, de préférence inférieur à 2,5 mm.

Les billes frittées de zircone selon l'invention sont particulièrement bien adaptées comme agents de broyage, notamment en milieu humide, ou comme agents de dispersion en milieu humide. L'invention concerne donc également l'utilisation d'une poudre de billes selon l'invention, ou de billes fabriquées suivant un procédé selon l'invention, en tant qu'agents de broyage, notamment en milieu humide, ou agents de dispersion en milieu humide.

Les propriétés des billes frittées de zircone selon l'invention, ainsi que leur facilité d'obtention, les rendent aptes à d'autres applications, notamment pour le traitement de surfaces (par projection des billes frittées selon l'invention en particulier).

L'invention concerne donc encore un dispositif choisi parmi une suspension, un broyeur, et un appareil de traitement de surfaces, ledit dispositif comportant une poudre de billes selon l'invention.

**Exemples**

*Protocoles de mesure*

Les méthodes suivantes peuvent être utilisées pour déterminer des propriétés de billes frittées ou de mélanges de billes frittées, en particulier selon l'invention.

Pour déterminer la **sphéricité** d'une bille, les plus petit et plus grand diamètres de Ferret sont mesurés sur un Camsizer XT commercialisé par la société Horiba.

La **quantification des phases cristallisées** présentes dans les billes frittées est effectuée directement sur les billes, lesdites billes étant collées sur une pastille carbone autocollante, de manière à ce que la surface de ladite pastille soit recouverte au maximum de billes.

Les phases cristallisées présentes dans les billes frittées sont mesurées par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, sur un domaine angulaire $2\theta$ compris entre 5° et 100°, avec un pas de 0,017°, et un temps de comptage de 150s/pas. L'optique avant comporte une fente de divergence programmable utilisé fixe de 1/4°, des fentes de Soller de 0,04 rad, un masque égal à 10mm et une fente anti diffusion fixe de 1/2°. L'échantillon est en rotation sur lui-même afin de limiter les orientations préférentielles.

L'optique arrière comporte une fente anti diffusion programmable utilisée fixe de 1/4°, une fente de Soller de 0,04 rad et un filtre Ni.

Les diagrammes de diffraction sont ensuite analysés qualitativement à l'aide du logiciel EVA et de la base de données ICDD2016.

Une fois les phases présentes mises en évidence, les diagrammes de diffraction sont analysés quantitativement avec le logiciel High Score Plus par affinement Rietveld selon la stratégie suivante :

- Un affinement du signal de fond est réalisé à l'aide de la fonction « treatment », « détermine background » avec les choix suivants : « bending factor » égal à 0 et « granularity » égal à 40 ;

- Classiquement, les fiches ICDD des phases présentes mises en évidence et quantifiables sont sélectionnées, et donc prises en compte dans l'affinement ;

- Un affinement automatique est ensuite réalisé en sélectionnant le signal de fond déterminé précédemment « use available background » et en sélectionnant le mode « automatic : option phase fit-default Rietveld » ;

- Un affinement manuel du paramètre « B overall » de toutes les phases sélectionnées est ensuite effectué de manière simultanée ;

- Enfin, un affinement manuel simultané du paramètre W de Caglioti des phases zircone quadratique et zircone cubique est réalisé si la fonction automatique ne l'a pas effectué. Dans ce cas, « W » est sélectionné pour lesdites phases de zircone et l'affinement est à nouveau effectué. Les résultats ne sont conservés que si le paramètre « Goodness of fit » du deuxième affinement est inférieur à celui du premier affinement.

La quantité de **phase amorphe** présente dans les billes frittées est mesurée par diffraction X, par exemple au moyen d'un appareil du type diffractomètre X'Pert PRO de la société Panalytical pourvu d'un tube DX en cuivre. L'acquisition du diagramme de diffraction est réalisée à partir de cet équipement, de la même manière que pour la détermination des phases cristallisées présentes dans les billes, l'échantillon analysé se présentant sous la forme d'une poudre. La méthode appliquée consiste en l'ajout d'une quantité connue d'un étalon totalement cristallisé, dans le cas présent une poudre d'oxyde de zinc, ZnO en une quantité égale à 20%, sur la base de la masse d'oxyde de zinc et d'échantillon de billes frittées broyées. La taille maximale de la poudre d'oxyde de zinc est égale à 1 $\mu$m et les billes frittées sont broyées de manière à obtenir une poudre présentant une taille maximale inférieure à 40 $\mu$m.

La taille maximale des particules de ZnO est entrée dans le logiciel High Score Plus de manière à limiter les effets de micro-absorption.

Le taux de phase amorphe, en pourcentage, se calcule à l'aide de la formule suivante, $Q_{ZnO}$ étant la quantité de ZnO déterminée à partir du diagramme de diffraction :

$$\text{Taux de phase amorphe} = 100*(100/(100-20))*(1-(20/Q_{ZnO})).$$

Par exemple, si $Q_{ZnO}$ est égal à 22%, alors le taux de phase amorphe est égal à $100*(100/(100-20))*(1 - (20/22))$ = 11,4%.

La **masse volumique apparente** des billes frittées est mesurée par pesée hydrostatique.

Les paramètres de maille nécessaires au calcul de la **masse volumique absolue** de la zircone au moins partiellement stabilisée sont déterminés par diffraction des rayons X sur la surface de l'échantillon à caractériser (l'échantillon n'étant pas broyé sous la forme d'une poudre) au moyen d'un appareil du type D8 Endeavor de la société Bruker. Les paramètres nécessaires à l'acquisition du diagramme de diffraction sont identiques à ceux utilisés pour l'acquisition du diagramme de diffraction nécessaire à la quantification des phases cristallisées.

Les paramètres de maille a et c sont déterminés après avoir effectué un affinement du diagramme de diffraction à l'aide du logiciel Fullprof disponible sur le site https://www.ill.eu/sites/fullprof/, en utilisant un profil de type pseudo-voigt (avec npr = 5), les paramètres affinés étant les suivants :

- le décalage d'échantillon (ou « sample displacement ») à l'aide de la fonction « SyCos »,
- la proportion lorentzienne / gaussienne de la fonction peudo-voigt à l'aide de la fonction « Shape 1 »,
- les paramètres de largeur à mi-hauteur U, V, W,
- les paramètres d'asymétrie à l'aide des fonctions « Asy1 » et « Asy2 »,
- les points de la ligne de base,

le groupe d'espace de la maille de zircone quadratique partiellement substituée étant P 42/ n m c (137), considéré identique à celui de la maille de zircone quadratique non substituée.

**L'analyse chimique** des billes frittées est mesurée par spectrométrie à plasma à couplage inductif, en anglais « *Inductively Coupled Plasma »,* ou « ICP », pour les éléments dont la teneur ne dépasse pas 0,5%. Pour déterminer la teneur des autres éléments, une perle du matériau de la bille frittée à analyser est fabriquée en fondant ledit matériau, puis l'analyse chimique est réalisée par fluorescence X.

La **taille moyenne des grains** des billes frittées est mesurée par la méthode de « Mean Linear Intercept ». Une méthode de ce type est décrite dans la norme ASTM E1382. Suivant cette norme, on trace des lignes d'analyse sur des images des billes frittées, puis, le long de chaque ligne d'analyse, on mesure les longueurs, dites « intercepts », entre deux joints de grains consécutifs coupant ladite ligne d'analyse.

On détermine ensuite la longueur moyenne « l' » des intercepts « l».

Les intercepts sont mesurés sur des images obtenues par microscopie électronique à balayage, d'échantillons de billes frittées, lesdites sections ayant préalablement été polies jusqu'à obtention d'une qualité miroir puis attaquées thermiquement, à une température inférieure de 50°C à la température de frittage, pour révéler les joints de grains. Le grossissement utilisé pour la prise des images est choisi de façon à visualiser environ 100 grains sur une image. 5 images par bille frittée sont réalisées.

La taille moyenne « d » des grains d'une bille frittée est donnée par la relation : d =1,56.l'. Cette formule est issue de la formule (13) de l'article « Average Grain Size in Polycrystalline Ceramics » M. I. Mendelson, J. Am. Cerm. Soc. Vol. 52, No.8, pp443-446.

L'écart type de la distribution de la taille de grain est égal à 1,56 fois l'écart type de la distribution des intercepts « l ».

La **surface spécifique** d'une poudre ou d'un mélange particulaire est mesurée par la méthode BET (Brunauer Emmet Teller) décrite dans Journal of American Chemical Society 60 (1938), pages 309 à 316.

Les **percentiles 10, 50 et 90** des poudres et des mélanges particulaires sont mesurés classiquement à l'aide d'un granulomètre laser de modèle LA950V2 commercialisé par la société Horiba.

Pour déterminer **l'usure dite « planétaire »**, 20 ml (volume mesuré à l'aide d'une éprouvette graduée) de billes à tester de taille comprise entre 0,9 et 1,1 mm, sont pesées (masse m0) et introduites dans un des 4 bols revêtus d'alumine frittée dense, de contenance de 125 ml, d'un broyeur planétaire rapide du type PM400 de marque RETSCH. Sont ajoutés dans le même bol contenant déjà les billes, 2,2 g de carbure de silicium de marque Presi (présentant une taille médiane $D_{50}$ de 23 $\mu$m) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse m1). Lesdites billes (masse m1) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100°C pendant 3h puis pesées (masse m2). Lesdites billes (masse m2) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100 $\mu$m, les billes sont séchées à l'étuve à 100 °C pendant 3h puis pesées (masse m3).

L'usure planétaire (UP) est exprimée en pourcentage (%) et est égale à la perte de masse des billes ramenée à la masse initiale des billes, soit : 100(m2-m3) / (m2) ; le résultat UP est donné dans le tableau 2.

*Protocole de fabrication*

Des billes frittées ont été préparées à partir :

- d'une poudre de zircone yttriée contenant une teneur molaire en $Y_2O_3$ égale à 2,5%, présentant une aire spécifique de l'ordre de 10 m$^2$/g et une taille médiane inférieure à 0,3 $\mu$m pour l'exemple 1,
- d'une poudre de zircone yttriée contenant une teneur molaire en $Y_2O_3$ égale à 3%, présentant une aire spécifique de l'ordre de 10 m$^2$/g et une taille médiane inférieure à 0,3 $\mu$m pour l'exemple 2,
- d'une poudre de zircone yttriée contenant une teneur molaire en $Y_2O_3$ égale à 2%, présentant une aire spécifique de l'ordre de 10 m$^2$/g et une taille médiane inférieure à 0,3 $\mu$m pour l'exemple 3,
- d'une poudre de cérine $CeO_2$ de pureté supérieure à 99% et présentant une taille médiane inférieure à 10 $\mu$m pour l'exemple 3,
- d'une poudre d'alumine de pureté supérieure à 99% et présentant une taille médiane inférieure à 0,5 $\mu$m pour les exemples 1 à 3.

Le tableau 1 suivant résume les mélanges particulaires des exemples obtenus à l'étape a).

[Tableau 1]

| Exemples | 1(*) | 2(*) | 3 |
|---|---|---|---|
| Composition du mélange particulaire (en pourcentages massiques) | | | |
| Poudre de zircone à 3 mol% d'Y$_2$O$_3$ | - | 99,4 | - |
| Poudre de zircone à 2 mol% d'Y$_2$O$_3$ | - | - | 98,8 |
| Poudre de zircone à 2,5 mol% d'Y$_2$O$_3$ | 99,1 | - | - |
| Poudre de cérine | - | - | 0,6 |
| Poudre d'alumine | 0,9 | 0,6 | 0,6 |
| (*) : hors invention | | | |

A l'étape a), les différentes poudres ont été mélangées puis cobroyées en milieu humide jusqu'à obtention d'un mélange particulaire présentant une taille médiane inférieure à 0,3 $\mu$m.

A l'étape b), le mélange particulaire a ensuite été séché.

A l'étape c), pour chaque exemple, une charge de départ consistant en une suspension aqueuse comportant, en pourcentages massiques sur la base de la matière sèche, 1% d'un dispersant de type ester d'acide carboxylique, 3% d'un dispersant de type acide carboxylique et 0,4% d'un agent gélifiant, à savoir un polysaccharide de la famille des alginates, a ensuite été préparée à partir du mélange particulaire sec obtenu à l'issue de l'étape b). Un broyeur à boulets a été utilisé pour cette préparation de manière à obtenir une bonne homogénéité de la charge de départ : Une solution contenant l'agent gélifiant a d'abord été formée. Successivement, on a ajouté dans de l'eau, le mélange particulaire et les dispersants. La solution contenant l'agent gélifiant a ensuite été ajoutée. Le mélange ainsi obtenu a été agité pendant 8 heures. La taille des particules a été contrôlée l'aide d'un granulomètre laser de modèle LA950V2 commercialisé par la société Horiba (taille médiane < 0,3 $\mu$m), puis de l'eau a été ajoutée en une quantité déterminée pour obtenir une suspension aqueuse à 68% en matière sèche et une viscosité, mesurée au viscosimètre Brookfield à l'aide du mobile LV3 à une vitesse égale à 20 tours/minute, inférieure à 5000 centipoises. Le pH de la suspension était alors d'environ 9 après un ajustement optionnel à l'aide d'une base forte.

A l'étape d), la suspension a été forcée à travers un trou calibré et à un débit permettant d'obtenir après frittage des billes d'environ 1 mm dans le cadre de ces exemples. Les gouttes de suspension tombaient dans un bain de gélification à base d'un électrolyte (sel de cation divalent), réagissant avec l'agent gélifiant.

Les billes crues ont été collectées, lavées à l'eau à l'étape e), puis séchées à 80°C à l'étape f) pour éliminer l'humidité.

A l'étape g), les billes ont ensuite été transférées dans un four de frittage où elles ont été frittées selon le cycle suivant :

-   montée à 100°C/h jusqu'à 500°C,
-   maintien de 2 heures à 500°C,
-   montée à 100°C/h jusqu'à 1425°C,
-   maintien de 2 heures à 1425°C,
-   descente en température par refroidissement naturel.

Résultats

Les résultats obtenus sont résumés dans le tableau 2 suivant.

[Tableau 2]

| Exemples | 1(*) | 2(*) | 3 |
|---|---|---|---|
| Analyse chimique, en pourcentages en masse sur la base des oxydes | | | |
| ZrO$_2$ + HfO$_2$ | 94,3 | 93,6 | 94,8 |
| Y$_2$O$_3$ | 4,4 | 5,4 | 3,5 |
| CeO$_2$ | 0 | 0 | 0,6 |

(suite)

| Exemples | 1(*) | 2(*) | 3 |
|---|---|---|---|
| Analyse chimique, en pourcentages en masse sur la base des oxydes | | | |
| $Al_2O_3$ | 0,9 | 0,6 | 0,6 |
| CaO | 0,3 | 0,3 | 0,4 |
| Autres oxydes | 0,1 | 0,1 | 0,1 |
| Analyse chimique en pourcentages molaires sur la base de $ZrO_2 + HfO_2 + Y_2O_3 + CeO_2$ | | | |
| $Y_2O_3$ | 2,5 | 3 | 2 |
| $CeO_2$ | 0 | 0 | 0,4 |
| Phases cristallisées, en pourcentages en masse sur la base des phases cristallisées et pour un total de 100% | | | |
| Zircone stabilisée | Complément à 100% | | |
| Zircone monoclinique | < 5 | < 5 | < 5 |
| Autres phases cristallisées | - | - | - |
| Autres caractéristiques des billes frittées | | | |
| Masse volumique apparente (g/cm$^3$) | 6,04 | 6,04 | 6,07 |
| Taille moyenne de grains ($\mu$m) | 0,29 | 0,2 | 0,24 |
| Usure planétaire UP (en %) | 1,6 | 1,7 | 1,3 |
| (*) : hors invention | | | |

Les billes frittées des exemples sont sensiblement entièrement constituées d'oxydes et présentent une quantité de phase amorphe inférieure à 5% en masse.

Les poudres de billes des exemples présentent une sphéricité moyenne supérieure à 0,9.

L'exemple 2, hors invention, est représentatif de l'état de la technique.

L'exemple 1, hors invention, est fourni afin de servir de base de comparaison à l'exemple 3 selon l'invention, la teneur molaire totale $Y_2O_3+CeO_2$ de ces deux exemples étant sensiblement identique.

Une comparaison des exemples 1 et 2, hors invention, et 3 selon l'invention, montre que les billes selon l'exemple 3 présentent une usure planétaire UP inférieure de 18,7% et 23,5% à celle des exemples 1 et 2, respectivement.

Comme cela apparaît clairement à présent, l'invention fournit une bille frittée de zircone présentant une usure planétaire UP remarquable.

Les inventeurs ont également constaté que les billes selon l'invention présentent une résistance élevée à la dégradation dans un milieu liquide chaud, en particulier lorsqu'elles sont en contact avec une eau à plus de 80°C, ces conditions étant appelées « conditions hydrothermales ». Elles sont donc particulièrement adaptées à une utilisation de billes comme média de broyage en milieu humide, notamment pour broyer finement des matières minérales, inorganiques ou organiques. Dans cette application, les billes sont dispersées dans un milieu aqueux ou un solvant, dont la température peut dépasser 80°C, tout en restant de préférence en dessous de 150°C, et subissent des frottements par contact avec la matière à broyer, par contact mutuel et par contact avec les organes du broyeur.

Bien entendu, l'invention n'est cependant pas limitée aux seuls modes de réalisation décrits précédemment.

**Revendications**

1. Bille frittée présentant :

   - la composition chimique suivante, en pourcentages en masse sur la base des oxydes :

      - $ZrO_2 + HfO_2 + Y_2O_3 + CeO_2$ : complément à 100% ;
      - 0% $\leq Al_2O_3 \leq$ 1,5% ;
      - CaO $\leq$ 2% ;
      - oxydes autres que $ZrO_2$, $HfO_2$, $Y_2O_3$, $CeO_2$, $Al_2O_3$ et CaO : $\leq$ 5% ;

les teneurs en $Y_2O_3$ et $CeO_2$, en pourcentages molaires sur la base de la somme de $ZrO_2$, $HfO_2$, $Y_2O_3$ et $CeO_2$, étant telles que $1,8\% \le Y_2O_3 \le 2,5\%$ et
$0,1\% \le CeO_2 \le 0,9\%$, et

- les phases cristallisées suivantes, en pourcentages en masse sur la base des phases cristallisées et pour un total de 100% :

- zircone stabilisée : complément à 100% ;
- zircone monoclinique : $\le 10\%$ ;
- phases cristallisées autres que zircone stabilisée et zircone

monoclinique : < 7%.

**2.** Bille frittée selon la revendication précédente constituée d'oxydes pour plus de 99% de sa masse et/ou dans laquelle :

- la teneur en $Y_2O_3$ est supérieure ou égale à 1,9%, en pourcentages molaires sur la base de la somme de $ZrO_2$, $HfO_2$, $Y_2O_3$ et $CeO_2$, et/ou
- la teneur en $CeO_2$ est supérieure ou égale à 0,3% et inférieure à 0,7%, en pourcentages molaires sur la base de la somme de $ZrO_2$, $HfO_2$, $Y_2O_3$ et $CeO_2$, et/ou
- la teneur en $Al_2O_3$, en pourcentages en masse sur la base des oxydes, est supérieure ou égale à 0,2% et inférieure ou égale à 1,2%, ou inférieure à 0,1%, et/ou
- la teneur en CaO, en pourcentage en masse sur la base des oxydes, est inférieure à 1,0%, ou supérieure à 0,2%, et/ou
- la teneur totale en oxydes autres que $ZrO_2$, $HfO_2$, $Y_2O_3$, $CeO_2$, $Al_2O_3$ et CaO, en pourcentages en masse sur la base des oxydes, est inférieure à 2%.

**3.** Bille frittée selon l'une quelconque des revendications précédentes, dans laquelle, en pourcentage en masse sur la base de la quantité totale de phases cristallisées :

- la teneur en zircone monoclinique est inférieure à 5%, et/ou
- la teneur totale en phases cristallisées autres que zircone stabilisée et zircone monoclinique, est inférieure à 5%.

**4.** Bille frittée selon l'une quelconque des revendications précédentes, dans laquelle la quantité massique de phase amorphe, en pourcentage en masse par rapport à la masse de ladite bille, est sensiblement nulle.

**5.** Bille frittée selon l'une quelconque des revendications précédentes, dans laquelle la zircone stabilisée est présente sensiblement uniquement sous la forme de zircone quadratique et/ou dans laquelle la zircone stabilisée est stabilisée à $Y_2O_3$ et à $CeO_2$.

**6.** Bille frittée selon l'une quelconque des revendications précédentes, présentant une taille moyenne de grains inférieure à 2 $\mu$m, et/ou présentant une distribution de la taille des grains présentant un écart type inférieur à 0,20 $\mu$m.

**7.** Bille frittée selon la revendication immédiatement précédente, présentant une taille moyenne de grains inférieure à 0,6 $\mu$m, et/ou présentant une distribution de la taille des grains présentant un écart type inférieur à 0,15 $\mu$m.

**8.** Poudre comprenant plus de 90% de billes selon l'une quelconque des revendications précédentes, en pourcentages en masse.

**9.** Dispositif choisi parmi une suspension, un broyeur et un appareil de traitement de surfaces, ledit dispositif comportant une poudre de billes selon la revendication immédiatement précédente.

**10.** Procédé de fabrication de billes frittées selon l'une quelconque des revendications 1 à 7, comprenant les étapes successives suivantes :

a) préparation d'un mélange particulaire présentant une taille médiane inférieure à 2 $\mu$m et une composition adaptée pour obtenir, à l'issue de l'étape g), des billes frittées selon l'une quelconque des revendications 1 à 7,
b) optionnellement, séchage dudit mélange particulaire,
c) préparation d'une charge de départ à partir dudit mélange particulaire, optionnellement séché,

d) mise en forme de la charge de départ sous la forme de billes crues,

e) optionnellement, lavage,

f) optionnellement, séchage,

g) frittage à une température de frittage supérieure à 1300°C de manière à obtenir des billes frittées.

**11.** Procédé de fabrication selon la revendication immédiatement précédente, dans lequel à l'étape a), une ou plusieurs poudres de matières premières introduites dans ledit mélange particulaire sont broyées, de préférence cobroyées.

**12.** Procédé de fabrication selon l'une quelconque des deux revendications immédiatement précédentes, dans lequel, à l'étape a), le mélange particulaire présente une taille médiane inférieure à 0,5 $\mu$m et/ou un rapport $(D_{90}-D_{10})/D_{50}$ inférieur à 2.

**13.** Procédé de fabrication selon l'une quelconque des trois revendications immédiatement précédentes, dans lequel, à l'étape a), aucune matière première autre que les poudres de zircone au moins partiellement stabilisée avec $Y_2O_3$, de cérine et de corindon n'est introduite volontairement dans le mélange particulaire.

**14.** Procédé de fabrication selon l'une quelconque des quatre revendications immédiatement précédentes, dans lequel une ou plusieurs des poudres du mélange particulaire sont remplacées, au moins partiellement, par des poudres équivalentes qui conduisent, dans lesdites billes, aux mêmes constituants, dans les mêmes quantités, avec les mêmes phases cristallographiques.

**Patentansprüche**

**1.** Gesinterte Kugel mit:

- der folgenden chemischen Zusammensetzung, in Massenprozenten bezogen auf Oxide:

  - $ZrO_2$ + $HfO_2$ + $Y_2O_3$ + $CeO_2$: Ergänzung auf 100 %,
  - 0 % $\leq$ $Al_2O_3$ $\leq$ 1,5 %,
  - CaO $\leq$ 2 %,
  - andere Oxide als $ZrO_2$, $HfO_2$, $Y_2O_3$, $CeO_2$, $Al_2O_3$ und CaO: $\leq$ 5 %,
  wobei die Gehalte an $Y_2O_3$ und $CeO_2$, in Molprozenten bezogen auf die Summe von $ZrO_2$, $HfO_2$, $Y_2O_3$ und $CeO_2$, derart sind, dass 1,8 % $\leq$ $Y_2O_3$ $\leq$ 2,5 % und
  0,1 % $\leq$ $CeO_2$ $\leq$ 0,9%, und

- den folgenden kristallinen Phasen, in Massenprozenten bezogen auf die kristallinen Phasen und auf insgesamt 100 %:

  - stabilisiertes Zirkonoxid: Ergänzung auf 100 %,
  - monoklines Zirkonoxid: $\leq$ 10 %,
  - andere kristalline Phasen als stabilisiertes Zirkonoxid und monoklines Zirkonoxid: < 7 %.

**2.** Gesinterte Kugel nach dem vorhergehenden Anspruch, die zu mehr als 99 Massen-% aus Oxiden besteht und/oder wobei:

- der Gehalt an $Y_2O_3$ mehr als oder gleich 1,9 %, in Molprozenten bezogen auf die Summe von $ZrO_2$, $HfO_2$, $Y_2O_3$ und $CeO_2$, beträgt und/oder
- der Gehalt an $CeO_2$ mehr als oder gleich 0,3 % und weniger als 0,7 %, in Molprozenten bezogen auf die Summe von $ZrO_2$, $HfO_2$, $Y_2O_3$ und $CeO_2$, beträgt und/oder
- der Gehalt an $Al_2O_3$, in Massenprozenten bezogen auf Oxide, mehr als oder gleich 0,2 % und weniger als oder gleich 1,2 % oder weniger als 0,1 % beträgt und/oder
- der Gehalt an CaO, in Massenprozent bezogen auf Oxide, weniger als 1,0 % oder mehr als 0,2 % beträgt und/oder
- der Gesamtgehalt an anderen Oxiden als $ZrO_2$, $HfO_2$, $Y_2O_3$, $CeO_2$, $Al_2O_3$ und CaO, in Massenprozenten bezogen auf Oxide, weniger als 2 % beträgt.

**3.** Gesinterte Kugel nach einem der vorhergehenden Ansprüche, wobei in Massenprozent bezogen auf die Gesamtmenge an kristallinen Phasen:

- der Gehalt an monoklinem Zirkonoxid weniger als 5 % beträgt und/oder
- der Gesamtgehalt an anderen kristallinen Phasen als stabilisiertes Zirkonoxid und monoklines Zirkonoxid weniger als 5 % beträgt.

4. Gesinterte Kugel nach einem der vorhergehenden Ansprüche, wobei die Menge, bezogen auf die Masse, an amorpher Phase, in Massenprozent bezogen auf die Masse der Kugel, im Wesentlichen null beträgt.

5. Gesinterte Kugel nach einem der vorhergehenden Ansprüche, wobei das stabilisierte Zirkonoxid im Wesentlichen einzig in Form von tetragonalem Zirkonoxid vorliegt und/oder wobei das stabilisierte Zirkonoxid mit $Y_2O_3$ und mit $CeO_2$ stabilisiert ist.

6. Gesinterte Kugel nach einem der vorhergehenden Ansprüche mit einer mittleren Korngröße von weniger als 2 $\mu$m und/oder mit einer Korngrößenverteilung, die eine Standardabweichung von weniger als 0,20 $\mu$m aufweist.

7. Gesinterte Kugel nach dem unmittelbar vorhergehenden Anspruch mit einer mittleren Korngröße von weniger als 0,6 $\mu$m und/oder mit einer Korngrößenverteilung, die eine Standardabweichung von weniger als 0,15 $\mu$m aufweist.

8. Pulver, umfassend in Massenprozenten mehr als 90 % Kugeln nach einem der vorhergehenden Ansprüche.

9. Vorrichtung, ausgewählt aus einer Suspension, einem Zerkleinerer und einer Oberflächenbehandlungsapparatur, wobei die Vorrichtung ein Pulver von Kugeln nach dem unmittelbar vorhergehenden Anspruch enthält.

10. Verfahren zur Herstellung gesinterter Kugeln nach einem der Ansprüche 1 bis 7, das die folgenden aufeinanderfolgenden Schritte umfasst:

a) Herstellung eines partikulären Gemischs mit einer medianen Größe von weniger als 2 $\mu$m und einer derartigen Zusammensetzung, dass am Ende von Schritt g) gesinterte Kugeln nach einem der Ansprüche 1 bis 7 erhalten werden,
b) gegebenenfalls Trocknen des partikulären Gemischs,
c) Herstellung einer Ausgangsbeschickung aus dem gegebenenfalls getrockneten partikulären Gemisch,
d) Formen der Ausgangsbeschickung in Form roher Kugeln,
e) gegebenenfalls Waschen,
f) gegebenenfalls Trocknen,
g) Sintern bei einer Sintertemperatur von mehr als 1300°C, um gesinterte Kugeln zu erhalten.

11. Herstellungsverfahren nach dem unmittelbar vorhergehenden Anspruch, wobei in Schritt a) ein oder mehrere in das partikuläre Gemisch eingebrachte Pulver von Ausgangsmaterialien zerkleinert, vorzugsweise gemeinsam zerkleinert, werden.

12. Herstellungsverfahren nach einem der beiden unmittelbar vorhergehenden Ansprüche, wobei in Schritt a) das partikuläre Gemisch eine mediane Größe von weniger als 0,5 $\mu$m und/oder ein Verhältnis $(D_{90}-D_{10})/D_{50}$ von weniger als 2 aufweist.

13. Herstellungsverfahren nach einem der drei unmittelbar vorhergehenden Ansprüche, wobei in Schritt a) kein anderes Ausgangsmaterial außer den Pulvern von zumindest teilweise mit $Y_2O_3$ stabilisiertem Zirkonoxid, Ceroxid und Korund absichtlich in das partikuläre Gemisch eingebracht wird.

14. Herstellungsverfahren nach einem der vier unmittelbar vorhergehenden Ansprüche, wobei ein oder mehrere der Pulver des partikulären Gemischs zumindest teilweise durch äquivalente Pulver ersetzt wird bzw. werden, die in den Kugeln zu denselben Bestandteilen in denselben Mengen, mit denselben kristallographischen Phasen führen.

**Claims**

1. A sintered bead having:

- the following chemical composition, as mass percentages on the basis of the oxides:

- $ZrO_2 + HfO_2 + Y_2O_3 + CeO_2$: remainder to 100%;
- $0\% \leq Al_2O_3 \leq 1.5\%$;
- $CaO \leq 2\%$;
- oxides other than $ZrO_2$, $HfO_2$, $Y_2O_3$, $CeO_2$, $Al_2O_3$ and $CaO$: $\leq 5\%$;

the contents of $Y_2O_3$ and $CeO_2$, as molar percentages on the basis of the sum of $ZrO_2$, $HfO_2$, $Y_2O_3$ and $CeO_2$, being such that $1.8\% \leq Y_2O_3 \leq 2.5\%$ and $0.1\% \leq CeO_2 \leq 0.9\%$, and
- the following crystalline phases, as mass percentages on the basis of the crystalline phases and for a total of 100%:

- stabilized zirconia: remainder to 100%;
- monoclinic zirconia: $\leq 10\%$;
- crystalline phases other than stabilized zirconia and monoclinic zirconia: $< 7\%$.

2. The sintered bead as claimed in the preceding claim, consisting of oxides for more than 99% of its mass and/or in which:

- the $Y_2O_3$ content is greater than or equal to 1.9%, as molar percentages on the basis of the sum of $ZrO_2$, $HfO_2$, $Y_2O_3$ and $CeO_2$, and/or
- the $CeO_2$ content is greater than or equal to 0.3% and less than 0.7%, as molar percentages on the basis of the sum of $ZrO_2$, $HfO_2$, $Y_2O_3$ and $CeO_2$, and/or
- the $Al_2O_3$ content, as mass percentages on the basis of the oxides, is greater than or equal to 0.2% and less than or equal to 1.2%, or less than 0.1%, and/or
- the CaO content, as a mass percentage on the basis of the oxides, is less than 1.0%, or greater than 0.2%, and/or
- the total content of oxides other than $ZrO_2$, $HfO_2$, $Y_2O_3$, $CeO_2$, $Al_2O_3$ and CaO, as mass percentages on the basis of the oxides, is less than 2%.

3. The sintered bead as claimed in either of the preceding claims, in which, as a mass percentage on the basis of the total amount of crystalline phases:

- the content of monoclinic zirconia is less than 5%, and/or
- the total content of crystalline phases other than stabilized zirconia and monoclinic zirconia is less than 5%.

4. The sintered bead as claimed in any one of the preceding claims, in which the mass amount of amorphous phase, as a mass percentage relative to the mass of said bead, is substantially zero.

5. The sintered bead as claimed in any one of the preceding claims, in which the stabilized zirconia is present substantially only in the form of quadratic zirconia and/or in which the stabilized zirconia is stabilized with $Y_2O_3$ and $CeO_2$.

6. The sintered bead as claimed in any one of the preceding claims, having an average grain size of less than 2 μm, and/or having a grain size distribution with a standard deviation of less than 0.20 μm.

7. The sintered bead as claimed in any one of the preceding claims, having an average grain size of less than 0.6 μm, and/or having a grain size distribution with a standard deviation of less than 0.15 μm.

8. A powder comprising more than 90% of beads as claimed in any one of the preceding claims, as mass percentages.

9. A device chosen from a suspension, a grinder, and surface treatment apparatus, said device including a powder of beads as claimed in the immediately preceding claim.

10. A process for manufacturing sintered beads as claimed in any one of claims 1 to 7, comprising the following successive steps:

a) preparation of a particle mixture having a median size of less than 2 μm and a composition suitable for obtaining, on conclusion of step g), sintered beads as claimed in any one of claims 1 to 7,
b) optionally, drying of said particle mixture,

c) preparation of a starting feedstock from said optionally dried particle mixture,
d) forming of the starting feedstock in the form of raw beads,
e) optionally washing,
f) optionally drying,
g) sintering at a sintering temperature above 1300°C so as to obtain sintered beads.

11. The manufacturing process as claimed in the immediately preceding claim, in which, in step a), one or more starting material powders introduced into said particle mixture are ground, preferably co-milled.

12. The manufacturing process as claimed in either of the two immediately preceding claims, in which, in step a), the particle mixture has a median size of less than 0.5 $\mu$m and/or a ratio $(D_{90}-D_{10})/D_{50}$ of less than 2.

13. The manufacturing process as claimed in any of the three immediately preceding claims, in which, in step a), no starting materials other than the zirconia powders at least partially stabilized with $Y_2O_3$, ceria and corundum are intentionally introduced into the particle mixture.

14. The manufacturing process as claimed in any of the four immediately preceding claims, in which one or more of the powders of the particle mixture are replaced, at least partially, with equivalent powders which lead, in said beads, to the same constituents, in the same quantities, with the same crystallographic phases.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0662461 A1

- CN 110606739 A

**Littérature non-brevet citée dans la description**

- *Journal of American Chemical Society,* 1938, vol. 60, 309-316

- **M. I. MENDELSON.** Average Grain Size in Polycrystalline Ceramics. *J. Am. Cerm. Soc.,* vol. 52 (8), 443-446